# EUROPEAN PATENT SPECIFICATION

(11) **EP 0 598 098 B1**
(45) Date of publication and mention of the grant of the patent: **20.12.1995**
(21) Application number: 93913375.7
(22) Date of filing: 16.06.1993
(51) Int. Cl.: F16F 9/53

(54) **CONTROLLABLE MOTION-DAMPER**
EINSTELLBARER BEWEGUNGSDÄMPFER
AMORTISSEUR DE MOUVEMENT REGLABLE

(30) Priority: 17.06.1992 GB 9212821
(43) Date of publication of application: 25.05.1994
(73) Proprietor: GEC ALSTHOM LIMITED, Rugby, Warwickshire CV21 1TB (GB)
(72) Inventor: REECE, Michael, Peter, London SW13 9QH (GB)
(74) Representative: Hoste, Colin Francis
(86) International application number: GB9301274
(87) International publication number: WO9325827

(56) References cited:
- EP-A- 0 460 808
- DE-A- 3 744 469
- GB-A- 1 282 568
- NL-A- 6 400 289
- US-A- 5 170 866
- PATENT ABSTRACTS OF JAPAN vol. 12, no. 490 (M-779)21 December 1988 & JP-A-63 210 432 (TOYOTA MOTOR CORP) 1 September 1988
- PATENT ABSTRACTS OF JAPAN vol. 7, no. 145 (M-224)(1290) 24 June 1983 & JP-A-58 057 536 (KINUGAWA GOMU KOGYO KK) 5 April 1983
- PATENT ABSTRACTS OF JAPAN vol. 13, no. 267 (M-840)(3615) 20 June 1989 & JP-A-01 069 837 (ASAHI CHEM IND LTD) 15 March 1989

## Description

This invention relates to controllable motion-dampers particularly, but not exclusively for damping vehicle body motion. Controllable dampers for vehicles are known in which, for example, two or more hydraulic cylinder dampers are 'switched' in parallel to control the stiffness according to detected vibration frequency. A convenient method of doing this is to use a single cylinder with two or more orifices which are opened and closed as the conditions require.

In railway vehicles particularly, there is a demand for dampers with a very high operating speed and it is found that known controllable dampers are not satisfactory in this respect. Additionally, dampers such as described above have a step change control and in many application continuous control is highly desirable.

One object of the present invention therefore is to provide a continuously controllable motion damper with a very high operating speed.

In a known damper as described in JP 632104382 there is provided a volume of damping fluid (7) contained within two flexible envelopes connected by a nozzle (8), which are externally subject to differential pressure resulting in operation from differential movement between members (2, 4) linked by the damper, said differential pressure causing the damping fluid to be forced through the nozzle from one envelope to the other - the damping fluid being a suspension of magnetic particles - and electromagnetic means (9, 12-14) being provided for producing a controllable magnetic field within the nozzle to control the viscosity of the damping fluid.

In such a damper which is designed for use as part of an engine mount in a motor vehicle the nozzle takes the form of a cylinder of constant cross-section throughout its axial length.

Such an arrangement can have certain problems in practice, more especially it is the case that application of the magnetic field to a cylindrical nozzle tends to produce a cylindrical plug of semi-solid damping 'fluid' in the nozzle and such a plug would be driven through the fluid in the envelopes like a bolt which would result in reduction of the resistance and damping force.

The present invention seeks to overcome this problem by rendering the nozzle in the form of two sections respectively diverging gradually in opposite directions from a common minimum cross-section.

Thus by the present invention there is provided a controllable motion damper comprising a volume of damping fluid contained within two flexible envelopes connected by a nozzle, the two envelopes being externally subject to differential pressure resulting in operation from differential movement between members linked by the damper, the differential pressure causing the damping fluid to be forced through the nozzle from one envelope to the other, the damping fluid being a suspension of low coercitivity magnetic particles, and electromagnetic means being provided for producing a controllable magnetic field within the nozzle to control the viscosity of the damping fluid characterised by the nozzle comprising two sections respectively diverging gradually in opposite directions from a common minimum-cross-section.

It will be appreciated that the reference to the "viscosity" of the magnetic suspension is not to the classical viscosity of the fluid; it is rather to the 'stiffness' or 'strength' resulting from the inclination of the magnetic particles to conform to the field pattern. It should be understood that in this specification it is this 'non-Newtonian viscosity' that is referred to.

Preferably, each section of the nozzle diverges continuously with a taper angle between 5° and 20° and preferably in the region of 10°. The envelopes may be of compressible bellows form.

Each of the envelopes may be enclosed in a respective inexpansible enclosure containing hydraulic fluid between the envelope and the enclosure wall, the two enclosures being connected to a source of differential pressure so that as hydraulic fluid is pumped into one enclosure in operation the enclosed envelope is compressed to cause the damping fluid to pass through the nozzle. The two enclosures may be provided by a single cylinder having a partition through which the nozzle extends. The source of differential pressure may comprise a master cylinder having a double action piston, connections to the enclosures being taken from the master cylinder on each side of the piston, the piston being adapted for connection as a link between the damped members.

Alternatively, the envelopes may be mounted in respective inexpansible enclosures having a common wall through which the nozzle extends, the enclosures together forming a common piston in a cylindrical housing, each enclosure being open to a respective end of the cylindrical housing, the enclosures and housing being full of hydraulic fluid, and the piston being adapted for connection as a link between the members, the arrangement being such that movement of the piston causes compression of the hydraulic fluid in one end of the housing and in the associated enclosure, compression of the associated envelope, and pumping of the damping fluid through the nozzle.

The bore of the nozzle may be grooved axially so that a cross section of the bore exhibits a corrugated wall.

The bore of the nozzle may have at least a lining of mechanically refractory material for resisting erosion by passage of the damping fluid.

The electromagnetic means may comprise a coil wound around the nozzle at least in the region of the minimum common cross-section.

Preferably the coil extends along the nozzle between positions between the length of the nozzle.

Two embodiments of controllable motion-damper in accordance with the invention will now be described, by way of example, with reference to the accompanying drawings, of which:
Figure 1 is a diagram of a central feature of the damper, i.e. a nozzle limiting the flow of damping fluid;
Figure 2 is a diagram of the main features of one embodiment of damper;
Figure 3 is a diagram of an alternative embodiment;
   and
Figure 4 is a diagram of a cross section of a modified version of the nozzle of Figure 1.

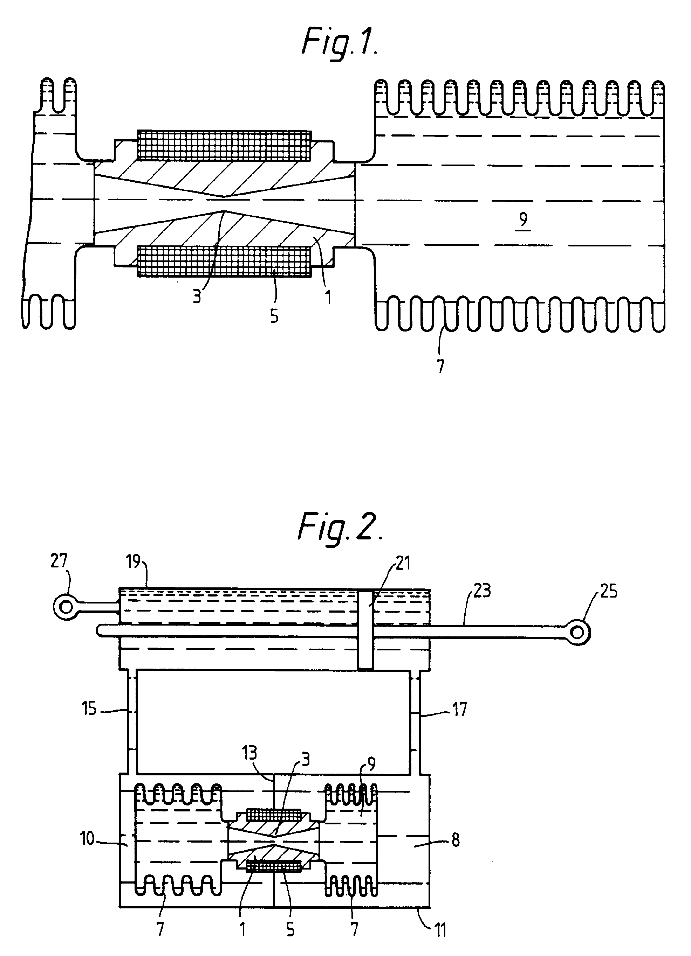

Referring now to Figure 1 of the drawings, this shows, very diagrammatically, a damping nozzle 1 and part of the associated apparatus. The nozzle 1 consists of a ceramic cylinder having a double conical bore whose two sections respectively diverge in opposite directions from the central minimum common cross-section 3 with a total taper angle of approximately 10°. The central part of the nozzle is wrapped with a coil 5 such as, when energised, to produce an axial magnetic field in the nozzle bore.

Since a rapid response is required, the field must follow a current change very quickly. Consequently the nozzle 1 must not be conductive (which would result in inductive inertia). It must also not be magnetic in order that the flux passes at least equally through the bore as the nozzle.

At each end of the nozzle a flexible envelope 7 is connected, this being formed from a durable rubber-type material. The envelope 7 has a wall of bellows form to permit a change in volume of the envelope. The space contained by the two bellows and the nozzle is filled completely with a damping fluid 9 which consists of a suspension of soft-iron particles in oil or hydraulic brake fluid. The particles need to be sufficiently small and spherical that they do not pack hard when left standing for long periods. While soft-iron is a common and cheap material, other magnetic materials will be suitable if they are of sufficiently low coercivity. When the current is removed from the coil 5 it is required that the particles become substantially de-magnetised.

Referring now to Figure 2, this shows one convenient arrangement for operating the damper of Figure 1. The two envelopes 7 are mounted in a cylinder 11 which has a central partition 13 sealed to and supporting the central nozzle assembly of nozzle 1 and coil 5. Two enclosures 8 and 10 are thus formed, each of which encloses one of the envelopes 7.

The cylinder 11 is closed but for two pipe connections 15,17 to a piston cylinder 19. This contains a double acting piston 21, the pipe connections being to opposite sides of the piston. The two cylinders 11 and 19 are completely full of hydraulic fluid as used for example, in fluid drive systems. There may in practice be a reservoir and a non-return valve, not shown. The piston 21 is mounted on a piston rod 23 which extends through sliding seals in the cylinder 19 in both directions. The total volume of fluid contained in the cylinder 19 is therefore unchanged as the piston moves since there is always the same volume of rod 23 within the cylinder 19. The piston rod 23 has one end coupling 25 adapted for coupling to one of two parts of a vehicle which in operation move relatively to each other with varying degrees of shock. The cylinder 19 has a fixed coupling 27 (shown very diagrammatically), which couples to the other of these two relatively movable parts. On a train carriage the piston rod coupling 25 would couple to the bogie, say, and the cylinder coupling 27 to the carriage body.

In operation, relative movement of the body and bogie causes the piston 21 to move in the cylinder 19. As illustrated, the piston has moved to the right. This causes the hydraulic fluid to be driven down the pipe 17 into the right-hand enclosure 8 of the cylinder 11. This cylinder is conveniently of metal and inexpansible and consequently a positive pressure is exerted on the right-hand envelope 7. At the same time, movement of piston 21 to the right causes fluid to be sucked up the pipe 15 so producing a negative pressure on the left-hand envelope 7. The cylinder 19 thus acts as a source of pressure differential which compresses the right-hand envelope 7 and expands the left-hand envelope. The damping fluid 9 contained within the envelopes 7 is thus driven through the nozzle 1. In doing so a restraining force is exerted on the relative movement of piston rod 23 and cylinder 19 and thus on relative movement of the parts to which they are coupled.

In the nozzle 1 there is an inherent resistance to flow due to the restricted orifice, having a minimum cross-section 3. This resistance can, however, be increased very considerably by creation of the magnetic field previously referred to. The coil current is increased at a rate, and to a value, determined in a feedback loop. As the field arises the magnetic particles in the damper fluid 9 tend to cling together so that what was previously a fairly free flowing fluid becomes a viscous semi-liquid.

The force resisting the shock movement increases with the velocity of the movement but also increases fairly linearly with the magnetising current. With minimal inductance the current and therefore the magnetic field and the damping force can be increased very rapidly.

In the design of the nozzle 1 it is important that there is no great step change as the damping fluid 9 emerges from the nozzle into the envelope 7. It is essential therefore that the bore of the nozzle is tapered at not too shallow an angle. 30° (total) taper angle is a reasonable minimum although the disadvantageous effect now to be described will occur to a greater and lesser extent as this angle is decreased and increased respectively.

If the bore of the nozzle were cylindrical, application of the magnetic field would tend to produce a cylindrical plug of semi-solid damping 'fluid'. This plug would be driven through the fluid in the envelope like a bolt and the resistance and damping force would be reduced. To make the 'plug' drag on the main body of fluid, the area of contact between the two is increased, by widening the nozzle exit.

A further improvement is made by restricting the coil length to less than that of the nozzle so that there is a portion of damping fluid at the ends of the nozzle not enclosed by the coil and which is therefore subjected to magnetic field of smaller intensity. The effect of these two modifications is to grade the transition between the more nearly solid damping 'fluid' in the nozzle and the more liquid fluid in the envelope 7.

A highly efficient smoothly controllable damper is thus provided having a very rapid response to shock movements and to the application of control current.

While in the above described embodiment the nozzle is totally of ceramic to provide an erosion resistant bore to the nozzle, other refractory materials may be used, even non magnetic low conductivity metal alloys. A further modification is to use a nozzle having suitable magnetic and conductive characteristics but merely coated with refractory material. It will be clear of course that a damping fluid carrying iron particles in suspension will be very erosive. It is for this reason that the damping fluid is isolated from any sliding surface in the described embodiments.

It will be apparent from the described arrangement of Figure 2 that the 'master' cylinder 19 can be positioned suitably for the members to be damped, while the damping cylinder 11 can be positioned remotely. The pipes 15 and 17 may be rigid or flexible.

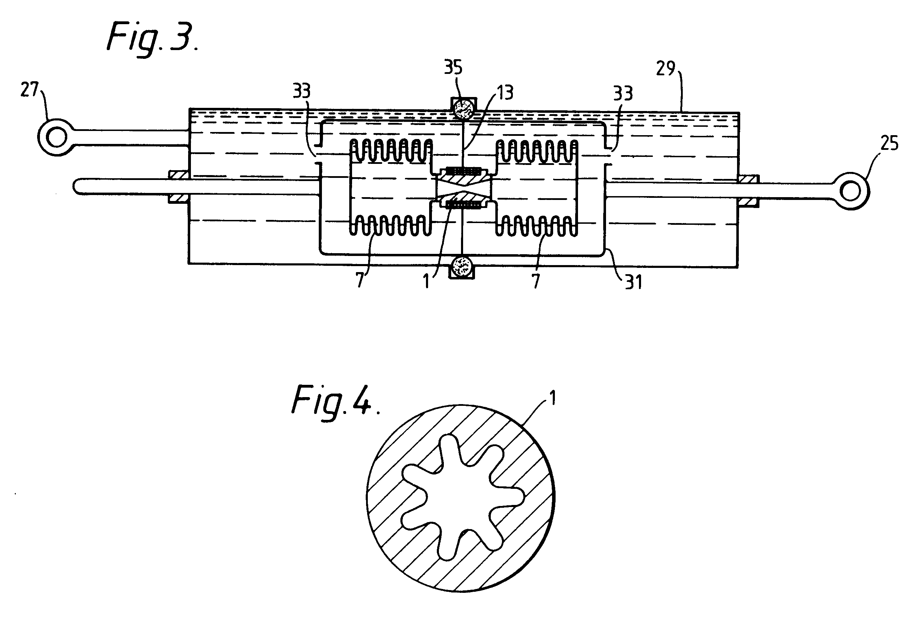

In an alternative embodiment, shown in Figure 3 the whole arrangement is incorporated in a single cylinder 29. This acts in the same manner as the master cylinder of Figure 2, the cylinder itself being coupled (27) to one of the damped members and the piston rod 23 being coupled (25) to the other. In this case however, the piston 31 is closely similar to the 'slave' unit 11 of Figure 2. Thus the cylinder 31 carries the damping unit 1, 7 and 7 mounted on a partition 13 which divides the cylinder 31 into two enclosures. In this case however, the two enclosures are open at vents 33 into the master cylinder 29. The cylinder 31 is slidable within cylinder 29, being sealed by O-ring 35 to separate the hydraulic fluid in the two ends of the master cylinder.

In operation, as the couplings 25 and 27 are thrust together, fluid in the left-hand end of cylinder 29 is forced into the left-hand end of 'piston' 31 so comprising the left-hand envelope 7. At the same time, hydraulic fluid in the right-hand end of cylinder 31 is sucked out, so expanding the right-hand envelope 7. Damping fluid is therefore forced from the left-hand envelope 7 to the right-hand envelope 7 through the nozzle 1. A magnetic field is created as before and a damping force restricting the flow of damping 'fluid' is created, depending on the velocity of approach of the couplings 25 and 27 and the magnetising current value.

In a modification of the nozzle of Figure 1 the tapered bore is corrugated, as shown in Figure 4. Again this tends to inhibit the formation of a magnetic plug of damping fluid when the semi-solidified fluid is forced out of the nozzle.

## Claims

1. A controllable motion damper comprising a volume of damping fluid (9) contained within two flexible envelopes (7) connected by a nozzle (1), the two envelopes (7) being externally subject to differential pressure resulting in operation from differential movement between members (25, 27) linked by the damper, said differential pressure causing the damping fluid (9) to be forced through the nozzle (1) from one envelope (7) to the other (7), wherein the damping fluid (9) is a suspension of low coercivity magnetic particles, and electromagnetic means (5) are provided for producing a controllable magnetic field within the nozzle (1) to control the viscosity of the damping field (9) characterised in that said nozzle (1) comprises two sections respectively diverging gradually in opposite directions from a common minimum cross-section (3).

2. A damping according to Claim 2, wherein each section of said nozzle (1) diverges continuously with a taper angle between 5° and 20°.

3. A damper according to Claim 1 or Claim 2, wherein each section of said nozzle (1) diverges continuously with a taper angle of approximately 10°.

4. A damper according to any preceding claim, wherein said envelopes (7) are of compressible bellows form.

5. A damper according to any preceding claim wherein each of the envelopes (7) is enclosed in a respective inexpansible enclosure (11) containing hydraulic fluid between the envelope (7) and the enclosure (8) wall, the two enclosures (8, 10) being connected to a source of (19) said differential pressure so that as hydraulic fluid is pumped into one said enclosure (3, 10) in operation the enclosed envelope (7) is compressed to cause the damping fluid to pass through the nozzle.

6. A damper according to Claim 5, wherein said two enclosures are provided by a single cylinder (11) having a partition (13) through which the nozzle extends.

7. A damper according to Claim 5 or Claim 6, wherein said source of differential pressure comprises a master cylinder (19) having a double action piston (21), connections (15, 17) to said enclosures (8, 10) being taken from said master cylinder (19) on each side of said piston (21), the piston being adapted for connection as a link between said members (25, 27).

8. A damper according to any of Claims 1, 2, 3 and 4, wherein said envelopes (7) are mounted in respective inexpansible enclosures (31) having a common wall (13) through which said nozzle (1) extends, said enclosures (31) together forming a common piston in a cylindrical housing (29), each enclosure (31) being open (33) to a respective end of the cylindrical housing (29), the enclosures and housing (29) being full of hydraulic fluid, and the piston (31) being adapted for connection as a link between said members (25, 27), the arrangement being such that movement of the piston (31) causes compression of the hydraulic fluid in one end of the housing (29) and in the associated enclosure (31), compression of the associated envelope (7), and pumping of the damping fluid (9) through the nozzle (1).

9. A damper according to any preceding claim wherein the bore of said nozzle (1) is grooved axially so that a cross section of the bore exhibits a corrugated wall.

10. A damper according to any preceding claim, wherein the bore of said nozzle has at least a lining of refractory material for resisting erosion by passage of said damping fluid.

11. A damper according to Claim 10, wherein said nozzle (1) consists of ceramic material.

12. A damper according to any preceding claim, wherein said electromagnetic means comprises a coil (5) wound around said nozzle (1) at least in the region of said minimum common cross-section (3).

13. A damper according to Claim 12, wherein said coil (5) extends along said nozzle (1) between positions within the length of the nozzle (1).

## Patentansprüche

1. Einstellbarer Bewegungsdämpfer, aufweisend ein Volumen eines Dämpfungsfluids (9), das innerhalb zweier flexibler Hüllen (7) enthalten ist, die durch eine Düse (1) verbunden sind, wobei die beiden Hüllen (7) extern einem Differentialdruck ausgesetzt werden, der im Betrieb aus einer Differentialbewegung zwischen Teilen (25, 27) resultiert, die durch den Dämpfer aneinandergefügt sind, wobei der Differentialdruck dafür sorgt, daß das Dämpfungsfluid (9) von einer Hülle (7) zur anderen (7) durch die Düse (1) gedrückt wird, wobei das Dämpfungsfluid (9) eine Suspension magnetischer Partikel geringer Koerzitivfeldstärke ist, und elektromagnetische Einrichtungen (5) vorgesehen sind, die innerhalb der Düse (1) ein steuerbares Magnetfeld hervorrufen, um die Viskosität des Dämpfungsfluids (9) zu steuern,
**dadurch gekennzeichnet**,
daß die Düse (1) zwei jeweils graduierlich in entgegengesetzte Richtungen von einem gemeinsamen minimalen Querschnitt (3) divergierende Sektionen aufweist.

2. Dämpfer nach Anspruch 1, in welchem jede Sektion der Düse (1) kontinuierlich mit einem Konizitätswinkel zwischen 5° und 20° divergiert.

3. Dämpfer nach Anspruch 1 oder Anspruch 2, in welchem jede Sektion der Düse (1) kontinuierlich mit einem Konizitätswinkel von angenähert 10° divergiert.

4. Dämpfer nach einem vorhergehenden Anspruch, in welchem die Hüllen (7) in Form kompressibler Faltenbälge vorgesehen sind.

5. Dämpfer nach einem vorhergehenden Anspruch, in welchem jede der Hüllen (7) in einem jeweiligen nicht dehnungsfähigen Gehäuse (11) aufgenommen ist, das zwischen der Hülle (7) und der Gehäuse (8) Wandung hydraulisches Fluid enthält, wobei die beiden Gehäuse (8, 10) mit einer Quelle (19) dieses Differentialdrucks so verbunden sind, daß, wenn hydraulisches Fluid im Betrieb in ein solches Gehäuse (8, 10) hineingepumpt wird, die umgebene Hülle (7) komprimiert wird, wobei sie das Dämpfungsfluid dazu veranlaßt, durch die Düse hindurchzutreten.

6. Dämpfer nach Anspruch 5, in welchem die beiden Gehäuse durch einen einzelnen Zylinder (11) vorgesehen sind, der eine Trenneinrichtung (13) aufweist, durch die sich die Düse erstreckt.

7. Dämpfer nach Anspruch 5 oder Anspruch 6, in welchem die Differentialdruckquelle einen Hauptzylinder (19), der einen Doppelwirkungs-Kolben (21) aufweist, umfaßt, wobei Verbindungen (15, 17) zu den Gehäusen (8, 10) vom Hauptzylinder (19) an jeder Seite des Kolbens (21) abgeleitet sind, und wobei der Kolben für einen Anschluß als Kopplungsglied zwischen den Teilen (25, 27) ausgelegt ist.

8. Dämpfer nach einem der Ansprüche 1, 2, 3 und 4, in welchem die Hüllen (7) in jeweiligen nicht dehnbaren Gehäusen (31) angebracht sind, die eine gemeinsame Wandung (13) aufweisen, durch die sich die Düse (1) erstreckt, wobei die Gehäuse (31) zusammen einen gemeinsamen Kolben in einem zylindrischen Gehäuseteil (29) bilden, wobei jedes Gehäuse (31) zu einem jeweiligen Ende des zylindrischen Gehäuseteils (29) offen (33) ist, wobei die Gehäuse und das Gehäuseteil (29) mit hydraulischem Fluid gefüllt sind, und wobei der Kolben (31) für einen Anschluß als ein Kopplungsteil zwischen den Teilen (25, 27) ausgelegt ist, wobei die Anordnung derart ist, daß die Bewegung des Kolbens (31) die Kompression des hydraulischen Fluids in einem Ende des Gehäuseteils (29) und im diesem zugeordneten Gehäuse (31) hervorruft, ferner die Kompression der zugehörigen Hülle (7) und ein Pumpen des Dämpfungsfluids (9) durch die Düse (1).

9. Dämpfer nach einem vorhergehenden Anspruch, in welchem die Bohrung der Düse (1) axial so genutet ist, daß einer Querschnitt der Bohrung eine gerippte Wandung zeigt.

10. Dämpfer nach einem vorhergehenden Anspruch, in welchem die Bohrung der Düse zumindest eine Auskleidung aus widerstandsfähigem Material aufweist, um einem Angriff durch den Durchtritt des Dämpfungsfluids zu widerstehen.

11. Dämpfer nach Anspruch 10, in welchem die Düse (1) aus keramischem Material besteht.

12. Dämpfer nach einem vorhergehenden Anspruch, in welchem die elektromagnetischen Einrichtungen eine Spule (5) umfassen, die um die Düse (1) zumindest in dem Bereich des minimalen gemeinsamen Querschnitts (3) gewunden ist.

13. Dämpfer nach Anspruch 12, in welchem die Spule (5) sich längs der Düse (1) zwischen Positionen innerhalb der Länge der Düse (1) erstreckt.

## Revendications

1. Amortisseur réglable d'un mouvement, comprenant un volume de fluide d'amortissement (9) logé dans deux enveloppes flexibles (7) raccordées par une buse (1), les deux enveloppes (7) étant soumises à l'extérieur à une pression différentielle résultant, pendant le fonctionnement, d'un déplacement différentiel d'organes (25, 27) reliés par l'amortisseur, la pression différentielle provoquant l'évacuation à force du fluide d'amortissement (9) dans la buse (1) d'une première enveloppe (7) à l'autre (7), dans lequel le fluide d'amortissement (9) est une suspension de particules magnétiques de faible champ coercitif, et un dispositif électromagnétique (5) est disposé afin qu'il crée un champ magnétique réglable dans la buse (1) et règle la viscosité du fluide d'amortissement (9), caractérisé en ce que la buse (1) comprend deux tronçons qui divergent progressivement en sens opposés à partir d'une section minimale commune (3).

2. Amortisseur selon la revendication 1, dans lequel chaque tronçon de la buse (1) diverge de façon continue avec un angle d'inclinaison compris entre 5 et 20°.

3. Amortisseur selon la revendication 1 ou 2, dans lequel chaque tronçon de la buse (1) diverge de façon continue avec un angle d'inclinaison d'environ 10°.

4. Amortisseur selon l'une quelconque des revendications précédentes, dans lequel les enveloppes (7) sont sous forme de soufflets compressibles.

5. Amortisseur selon l'une quelconque des revendications précédentes, dans lequel chacune des enveloppes (7) est enfermée dans une enceinte respective non dilatable (11) contenant un fluide hydraulique placé entre l'enveloppe (7) et la paroi d'enceinte (8), les deux enceintes (8, 10) étant raccordées à une source (19) de pression différentielle afin que, lorsque du fluide hydraulique est pompé dans l'une des enceintes (3, 10) pendant le fonctionnement, l'enveloppe fermée (7) soit comprimée et provoque le passage du fluide d'amortissement dans la buse.

6. Amortisseur selon la revendication 5, dans lequel les deux enceintes ont un seul cylindre (11) comprenant une cloison (13) dans laquelle est disposée la buse.

7. Amortisseur selon la revendication 5 ou 6, dans lequel la source de pression différentielle comprend un maître-cylindre (19) ayant un piston à double effet (21), des connexions (15, 17) avec les enceintes (8, 10) partant du maître-cylindre (19) de chaque côté du piston (21), le piston étant destiné à être raccordé sous forme d'une liaison entre lesdits organes (25, 27).

8. Amortisseur selon l'une quelconque des revendications 1, 2, 3 et 4, dans lequel les enveloppes (7) sont montées dans des enceintes respectives non dilatables (31) ayant une paroi commune (13) dans laquelle est disposée la buse (1), les enceintes (31) formant ensemble un piston commun placé dans un boîtier cylindrique (29), chaque enceinte (31) étant en communication (33) avec une extrémité respective du boîtier cylindrique (29), les enceintes et le boîtier (29) étant pleins d'un fluide hydraulique, et le piston (31) étant destiné à former une liaison entre lesdits organes (25, 27), la disposition étant telle que le déplacement du piston (31) provoque une compression du fluide hydraulique à une première extrémité du boîtier (29) et dans l'enceinte associée (31), la compression de l'enveloppe associée (7) et le pompage du fluide d'amortissement (9) dans la buse (1).

9. Amortisseur selon l'une quelconque des revendications précédentes, dans lequel le trou de la buse (1) a une gorge axiale telle que la section du trou présente une paroi ondulée.

10. Amortisseur selon l'une quelconque des revendications précédentes, dans lequel le trou de la buse a au moins un revêtement d'une matière réfractaire destinée à résister à l'érosion par passage d'un fluide d'amortissement.

11. Amortisseur selon la revendication 10, dans lequel la buse (1) est formé d'une matière céramique.

12. Amortisseur selon l'une quelconque des revendications précédentes, dans lequel le dispositif électromagnétique comporte un enroulement (5) bobiné autour de la buse (1) au moins dans la région de section commune minimale (3).

13. Amortisseur selon la revendication 12, dans lequel l'enroulement (5) est disposé le long de la buse (1) entre des positions espacées le long de la buse (1).
